(19) Europäisches Patentamt
European Patent Office
Office européen des brevets

(11) Publication number: **0 223 149 B1**

(12) # EUROPEAN PATENT SPECIFICATION

(45) Date of publication of the patent specification: **23.05.90**

(51) Int. Cl.[5]: **C08F 236/18**

(21) Application number: **86115259.3**

(22) Date of filing: **04.11.86**

(54) **Heat resistant chloroprene copolymers.**

(30) Priority: **04.11.85 US 794554**

(43) Date of publication of application:
**27.05.87 Bulletin 87/22**

(45) Publication of the grant of the patent:
**23.05.90 Bulletin 90/21**

(84) Designated Contracting States:
**DE FR GB IT**

(56) References cited:
**FR-A-1 358 188**
**FR-A-2 160 234**
**FR-A-2 269 543**
**US-A-3 595 847**

**The file contains technical information submitted after the application was filed and not included in this specification**

(73) Proprietor: **E.I. DU PONT DE NEMOURS AND COMPANY, 1007 Market Street, Wilmington Delaware 19898(US)**

(72) Inventor: **Takeshita, Tsuneichi, 5 Hilloch Lane, Chadds Ford Pennsylvania 19317(US)**

(74) Representative: **Abitz, Walter, Dr.-Ing. et al, Abitz, Morf, Gritschneder, Freiherr von Wittgenstein Postfach 86 01 09, D-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 223 149 B1

ACTORUM AG

## Description

BACKGROUND OF THE INVENTION

The present invention is directed to a heat resistant polychloroprene copolymer and process for its preparation.

Polychloroprene prepared by the polymerization of chloroprene in the presence of a mercaptan chain-terminator, often referred to as type-W neoprene, has excellent compression set resistance, a characteristic that is desirable for automotive power transmission belts, but, unfortunately, such polychloroprene cannot be used in dynamic applications where flexing occurs, such as automotive V-belts because the cured elastomer typically contains only monosulfide linkages. When the polychloroprene containing monosulfide linkages has a relatively thick cross-section and is subjected to flexing, the elastomer fails rapidly because of its poor dynamic properties. However, such polychloroprene elastomers have many other useful applications, one of which is fabricating such elastomers into hoses for automotive use and the like. Although the heat-resistance of the type-W neoprene is excellent, polychloroprene polymers having even better heat resistance are needed to withstand the severe heat conditions of, for example, under the hood automotive applications, while at the same time increasing the useful service life of parts made therefrom. Polychloroprenes that are "sulfur-modified", often referred to as type-G neoprene, yield cured elastomers that are especially useful for dynamic applications, such as power transmission belts, including V-belts for under-the-hood automotive applications. The sulfur-modified polychloroprenes are prepared by polymerizing chloroprene (2-chloro-l,3-butadiene) in an aqueous emulsion system in the presence of elemental sulfur. The sulfur becomes incorporated in the polymer chain in the form of polysulfide linkages. Some of the polysulfide linkages normally are cleaved chemically after polymerization to yield polymers having viscosities suitable for processing. This cleavage step is customarily called peptization. These sulfur-modified polychloroprene elastomers are especially useful for dynamic applications such as power transmission belts, especially V-belts. Unfortunately, the sulfur-modified type-G neoprene elastomers have poorer heat resistance than the type-W neoprene elastomers. Additional components, such as antioxidants and antiozonants, have been added to the sulfur-modified polychloroprene to improve its heat resistance and retard the onset of hardness but further improvement by altering formulations based on presently available sulfur-modified polychloroprene elastomers does not appear likely.

The increase in under-the-hood temperatures resulting from higher engine operating temperatures and front wheel drive engine configurations have heightened the need for a more heat resistant mercaptan chain-terminated polychloroprene for use as belts, for example, and a sulfur-modified polychloroprene for dynamic applications such as automotive belts. It has been an object of belt manufactures to extend the useful service life of automotive belts. Replacement of automotive belts has become more expensive with smaller engines and front-wheel drive making belt replacement more difficult. The invention described herein provides polychloroprenes that have improved heat resistance and therefore, the useful life of the article when used in an environment in which it is subject to high temperatures is extended. The polychloroprenes of the present invention are useful in hoses and power transmission belts of all sorts including V-belts, multigroove belts, syncro-cog, CTV etc. in automotive, industrial and agricultural areas.

FR-A 2 160 234 discloses the preparation of copolymers of chloroprene and up to 20% or even 50% of a monomer, such as methyl methacrylate, which is copolymerizable with the chloroprene. The patent suggests using polymerization temperatures of 0° to 80°C, preferably 30°C to 50°C. The examples all use 43°C as the polymerization temperature. The polymerization is conducted in the presence of a dialkoxy xanthogen disulfide molecular weight regulator. The use of dialkyl xanthogen disulfide is not mentioned. The comonomer selection is not critical. The French patent specification does not reveal the measures which must be taken nor how the procedure must be with the selection of monomers in order to obtain chloroprene copolymers which, on the one hand, have improved heat resistance and, on the other hand, are good elastomers.

FR-A 1 358 188 discloses the preparation of mercaptan modified terpolymer of 2-chloro-1,3-butadiene, 2,3-dichloro-1,3-butadiene and styrene. The polymerization of the terpolymers in the examples is always conducted at 40°C. The reference discloses a broad temperature range of 10°C to 60°C with from 30°C to 50°C being preferred. The reference is directed to forming terpolymers having excellent low temperature properties.

US-A 3 595 847 discloses homopolymers of dichloroprene as well as isopolymers of chloroprene with either 2,3-dichloro-1,3-butadiene or a mono-ethylenically unsaturated comonomer. The specification at column 2, line 66 discloses 0°C to 60°C as being suitable for the polymerization reaction. The examples polymerize at either 40°C to 45°C, 49°C or 40°C, none of which will yield a polymer in which at least 92% of the units derived from chloroprene are in the 1,4-trans configuration. The process involves adding a peptizing agent, immediately coagulating the polychloroprene emulsion and then drying at a relatively high temperature of 80°C to 170°C.

SUMMARY OF THE INVENTION

The present invention is directed to a polychloroprene copolymer that has improved heat resistance, and when fabricated into finished products where used in an environment subject to heat, such as automotive V-belts or timing belts, the useful service life of the article is extended. More particularly, the present invention is directed to mercaptan modified, or dialkyl xanthogen disulfide modified or sulfur-modified polychloroprene copolymers comprising 2-chloro-1,3-butadiene (CD) in which at least about 92% of the CD derived units present have the 1,4-trans configuration up to 20% by weight based on the weight of 2-chloro-1,3-butadiene, preferably 2% by weight or more, units of 2,3-dichloro-1,3-butadiene (ACS), and 2–25% by weight based on the weight of 2-chloro-1,3-butadiene and 2,3-dichloro-1,3-butadiene, preferably 6–18% by weight, randomly distributed units of a vinyl monomer copolymerizable with units of 2-chloro-1,3-butadiene said polychloroprene copolymer having a Mooney viscosity of ML 1+4′ (100°C) of from 20–150 ± 5.

The polychloroprene copolymer is made by a process which comprises emulsion polymerizing a mixture of 2-chloro-1,3-butadiene, up to 20% by weight based on the weight of 2-chloro-1,3-butadiene, preferably 2% by weight or more based on the weight of 2-chloro-1,3-butadiene, of 2,3-dichloro-1,3-butadiene and 2–25% by weight based on the weight of 2-chloro-1,3-butadiene and 2,3-dichloro-1,3-butadiene of a vinyl monomer copolymerizable with 2-chloro-1,3-butadiene at a temperature of from about 0–25°C in the presence of elemental sulfur or a mercaptan or xanthogen disulfide added in amounts sufficient to obtain a Mooney viscosity of M 1+4′ (100°C) of the polychloroprene copolymer of from 20–150 ± 5, with the proviso that the sulfur-modified polychloroprene copolymer is peptized to at least about 60% of the theoretical maximum.

DETAILED DESCRIPTION OF THE INVENTION

The polymers of the present invention are prepared by substantially conventional emulsion polymerization procedures except for the presence of a vinyl monomer, the low temperature requirement, and the amounts of reactants used.

The polymerization is carried out in an aqueous emulsion using any of the conventional free radical polymerization catalysts. These include alkali metal or ammonium ferricyanides and peroxy compounds such as alkali metal or ammonium persulfates, hydrogen peroxide, cumene hydroperoxide, and dibenzoyl peroxide. The amount of free radical catalyst which is used is between the ranges of 0.001–0.2% by weight based on the total amount of monomers. In order to provide an acceptably high rate of polymerization at the low temperatures used in this invention it is usually desirable to employ reducing agents such as sodium formaldehyde sulfoxylates or sodium hydrosulfite in combination with the free radical catalyst.

Any of the conventional emulsifying agents may be used in preparing the monomer emulsion. These include the water-soluble salts, particularly the sodium, potassium, or ammonium salts, of compounds of the following types: long-chain fatty acids; rosins or rosin derivatives, such as wood rosin, tall oil rosin, disproportionated rosin, or partially polymerized rosin; higher alcohol sulfates; arylsulfonic acids, such as nonylbenzenesulfonic acid; and formaldehyde condensates of arylsulfonic acids, such as the condensation product of formaldehyde and naphthalene sulfonic acid.

The concentration of organic monomer present in the aqueous emulsion is not critical. In general, 30 to 60 percent, by weight, based on the total weight of the emulsion, is the range of concentrations of organic monomers used in the preparation of the polymer.

The pH of the reaction mixture can range from 3-l3 and preferably about l0 when using non-acidic monomers. However, it is preferable to use in the polymerization process pHs in the alkaline ranges. The polymerization must be carried out at about 0-25°C, preferably at l0-20°C.

Polymerization is carried out in an inert atmosphere free of oxygen, such as an atmosphere of nitrogen or other inert gas, which is customary procedure.

The percent conversion of said chlorobutadiene monomers is usually within the range of from 65-85 percent by weight, preferably 70-80 percent.

Polymerization may be stopped at any desired point by use of conventional "short-stopping" agents such as are disclosed in U.S. Patent 2,576,009.

For sulfur-modified polychloroprene copolymers, preferably, a lower tetraalkylthiuram disulfide can be used to stop polymerization and to initiate peptization. Since not all thiuram disulfides are equally active, it is customary to express the thiuram disulfide concentration in terms of activity of tetraethylthiuram disulfide. Equivalency curves can be readily obtained by simple experiments by one skilled in the art. The preferred concentration of thiuram disulfide is the equivalent of 0.8-l.2 parts tetraethylthiuram disulfide per l00 parts of total organic monomer in the initial emulsion. The thiuram disulfide can be conveniently added, for example, as a toluene solution emulsified in water. Conventional short-stopping agents are added to the polymerization mixture containing polychloroprene copolymers containing mercaptan and dialkyl xanthogen modified polymers. Representative short-stopping agents include thiodiphenylamine, p-t-butylcatechol, hydroquinone, sodium diethyldithiocarbamate, diethylhydroxyl-amine in amounts of from 0.00l-l% by weight based on the total weight of organic monomer in the initial emulsion.

At the same time as the thiuram disulfide is added, it is preferred that a free radical scavenger that does not react with the sulfide linkages of the sulfur-modified chloroprene copolymer be added to the latex. Representative free radical scavengers include phenothiazine, dihydric phenols, aralkyl derivatives thereof, and phenolic anti-oxidants substituted in at least one position ortho to the hydroxy group with a branched alkyl group containing 3-12 carbon atoms. Representative examples are hydroquinone,
2,5-di-tert-butylhydroquinone,
2,5-di-tert-amylhydroquinone,
4-tert-butylpyrocatechol,
4,4′-thiobis(2-methyl-6-tert-butyl phenol),
4,4′-methylenebis(2,6-di-tert-butylphenol),
2,6-di-tert-butyl-alpha-(methylamino)-p-cresol,
4,4′-thiobis(6-tert-butyl-m-cresol), and
2,6-di-tert-butyl-4-phenylphenol.

The water-soluble dialkyl dithiocarbamate salt which is next added to the polymer latex of the sulfur-modified polychloroprene (preferably, as an aqueous solution) acts together with the thiuram disulfide to peptize the polymer within the latex as it ages. The degree of completion of peptization is determined as described in working examples described, herein. To achieve the desired degree of peptization, it is necessary to use an amount of the dithiocarbamate equivalent to at least 0.7 parts of sodium dibutyl dithiocarbamate, preferably 0.8-1.2 parts per 100 parts monomer. Sodium dibutyl dithiocarbamate is chosen as the standard dialkyl dithiocarbamate, and equivalent amounts of other dialkyl dithiocarbamates (that is, amounts having equivalent activity) can be obtained experimentally in a simple manner.

Tetraalkylthiuram disulfides and water-soluble dialkyl dithiocarbamate salts useful in the practice of this invention are those in which the alkyl groups attached to the nitrogen atoms are acyclic alkyl groups, or where the two alkyl groups attached to the same nitrogen atom are connected to form an alpha, omega-alkylene group. Representative alpha, omega-alkylene groups include pentamethylene and tetramethylene, while representative alkyl groups include methyl, ethyl, butyl, and octyl. Typical compounds include, for example, dipentamethylenethiuram disulfide, tetramethylthiuram disulfide, sodium dioctyl dithiocarbamate, and sodium dibutyl dithiocarbamate.

The polymer peptization rate is dependent on the latex pH and temperature. This step can be carried out at about 15°-50°C., but ambient temperatures of about 23°-27°C. are preferred. The peptization rate increases with pH. The minimum practical pH is about 10. A degree of peptization of at least 60% of the theoretical maximum can usually be obtained in 10-30 hours.

Unreacted monomer can be stripped from the polymer latex any time after "short-stopping" the polymerization and preferably during the peptization step, as described below in Example I; the stripping time being counted as peptization time. As soon as the unreacted monomer has been removed, the latex is cooled to the peptization temperature.

The polymer is isolated by conventional methods such as are described in U.S. Patents 2,187,146 and 2,914,497.

The chain transfer agent used can be a dialkyl xanthogen disulfide. Such dialkyl xanthogen disulfides have the general formula

$$R_1 - O - \underset{\underset{S}{\|}}{C} - S - S - \underset{\underset{S}{\|}}{C} - O - R_2$$

in which $R_1$ and $R_2$ are alkyl groups usually containing one to eight carbon atoms. Examples of suitable compounds are dimethyl xanthogen disulfide, diethyl xanthogen disulfide, diisopropyl xanthogen disulfide, dibutyl xanthogen disulfides, and bis(2-ethylhexyl) xanthogen disulfide. The preferred compounds are those in which the alkyl groups contain 2 to 4 carbon atoms. Diisopropyl xanthogen disulfide is especially preferred for use in the process for making the polychloroprene copolymers.

The required amount of the different dialkyl xanthogen disulfides will vary with their molecular weight. Beyond that, there are differences in the extent of modification provided by equimolar amounts of different dialkyl xanthogen disulfides.

The amounts of elemental sulfur and dialkyl xanthogen disulfide are selected in preparing the sulfur-modified chloroprene copolymer described herein to provide Mooney viscosities of from about 25-150.

The polymers prepared by the process of this invention yield vulcanizates which exhibit substantially improved heat resistance when compared with commercially available grades of polychloroprene useful in dynamic applications such as power transmission belts. None of the other properties of the polychloroprene important for dynamic use such as flexibility, compression set, tear strength, and hardness are adversely affected. The sulfur-modified chloroprene copolymers of this invention can be substituted for commercially available polychloroprene currently used in the manufacture of power transmission belts such as automotive V-belts.

Since these sulfur-modified polymers have improved heat-aging characteristics their service life in power transmission belts is significantly increased. As a result of the polymerization conditions and

amounts of reactants employed, the polymers of this invention can be characterized by their content of units derived from 2,3-dichloro-l,3-butadiene, units derived from the vinyl monomer the proportion of units derived from 2-chloro-l,3-butadiene which have a l,4-trans configuration and their curability with metal oxides alone. In the the present invention, the amount of units derived from 2,3-dichloro-l,3-butadiene present is up to about 20 parts and preferably about 2 or more parts per l00 parts of 2-chloro-l,3-butadiene. Since 2,3-dichloro-l,3-butadiene is substantially more reactive than 2-chloro-l,3-butadiene ($r_1$, 2,3-dichloro-l,3-butadiene = l.5 and $r_2$, 2-chloro-l,3-butadiene = 0.3), the dichlorobutadiene is incorporated into the polymer more rapidly than is the monochlorobutadiene. Because only 65 to 85% by weight of the total chlorobutadiene monomers charged is converted to polymer, the proportion of dichlorobutadiene in the isolated polymer is higher than the proportion of dichlorobutadiene in the diene monomers charged. For these reasons, the isolated polymer will contain more units derived from 2,3-dichloro-l,3-butadiene than the amount charged to the polymerization vessel. The presence of units derived from 2,3-dichloro-l,3-butadiene can be shown by nuclear magnetic resonance (NMR) spectroscopy. The amount of dichlorobutadiene in the polymer can be determined by chlorine analysis, infrared (IR) spectroscopy and nuclear magnetic resonance (NMR) spectroscopy of a refined polymer sample.

The proportion of the units derived from 2-chloro-l,3-butadiene in the polymer which have a l,4-trans configuration is a function of the temperature used during polymerization. Polymers prepared within the temperature range of 0°-25°C will have a l,4-trans content of greater than 92% based on the total number of units derived from 2-chloro-l,3-butadiene present, since this is strictly a function of polymerization temperature when using a free radical polymerization system. The l,4-trans content can be determined by carbon-l3 nuclear magnetic resonance (NMR) spectroscopy, by the methods of Coleman, Tabb and Brame, Rubber Chem. Technol., Vol. 50, (l977), pages 49-62 and Coleman and Brame, Rubber Chem. Technol., Vol. 5l, No. 4 (l978), pages 668-676. This reference contains a table correlating polymerization temperature and the amount of chloroprene polymer units having the 1,4-trans configuration.

Suitable vinyl monomers for use herein are those which have boiling points of from 0° to 200°C. Below 0°C boiling point monomers will not be liquids in the polymerization emulsion. Monomers having boiling points above 200°C create problems in removing unreacted monomers by low pressure steam stripping as is commonly used to remove unreacted chloroprene from the reaction mixture. Further, the vinyl monomer has to be reactive with 2-chloro-1,3-butadiene and emulsifiable or soluble in water. Preferably the vinyl monomer contains a polar substituent so that the product copolymer retains the resistance to swelling or solvating effect by hydrocarbons, which often is the reason for using polychloroprene rather than the less expensive hydrocarbon rubbers. Thus the preferred vinyl monomers are acrylonitrile; methacrylonitrile, lower alkyl acrylates, methacrylates, acrylamides, methacrylamides, maleates and fumarates; acrylic acid; methacrylic acid; fumaric acid; and maleic acid. Styrene and α-methyl styrene can be used but are less preferred because they are non-polar and tend to reduce the resistance of the copolymer to hydrocarbons. Generally the vinyl comonomer will be present in the copolymer in an amount of from 2 to 25 parts by weight per 100 parts by weight of 2-chloro-1,3-butadiene and 2,3-dichloro-1,3-butadiene present. The vinyl monomers are generally less reactive than 2-chloro-1,3-butadiene. For this reason it is preferred that 2 or more parts by weight per 100 parts by weight of 2-chloro-1,3-butadiene of 2,3-dichloro-1,3-butadiene, which is more reactive be present. The use of both 2,3-dichloro-1,3-butadiene and the vinyl monomer results in a copolymer in which the 2-chloro-l,3-butadiene derived units are regularly broken into relatively small numbers of consecutive units fairly uniformly along the entire length of the polymer chain. Since the vinyl monomer which is less reactive will begin to predominate in the polymer chain as the polymerization approaches completion, it is necessary to stop polymerization when from 65% to 85% and preferably 70% to 80% of the monomers present have polymerized. At 70% conversion of CD about one third of the vinyl monomer charged will be in the polymer chain.

The uniform random distribution of comonomers along the polymer chains is illustrated by the drawings. Fig. l is a plot showing mole % CD in the copolymer for various proportions of methyl methacrylate (MMA) and 2,3-dichloro-l,3-butadiene (ACR) comonomers at various mole % conversions. In Fig l, line l is for l5 mole % MMA; line 2 is for l3.5 mole % MMA, l.5 mole % ACR; line 3 is for l2 mole % MMA, 3 mole % ACR; line 4 is for l0.5 mole % MMA, 4.5 mole % ACR; line 5 is 9 mole % MMA, 6 mole % ACR and line 6 is for 7.5 mole % MMA and 7.5 mole % ACR. In each case 85 mole % chloroprene was charged to the reactor.

Fig. 2 is a plot showing the amount of ACR, MMA and ACR plus MMA in the copolymer at various mole % conversions. In this run 85 mole % chloroprene, 3 mole % 2,3-dichloro-l,3-butadiene and l2 mole % methyl methacrylate were charged to the reactor.

Finally, the polymers of this invention are characterized by their good curability with metal oxides alone. Polychloroprene polymers prepared in the presence of chain terminators such as xanthogen disulfides and mercaptans and in the absence of sulfur yield only weak cures with metal oxides alone. Only those polymers prepared in the presence of a significant amount of sulfur, i.e., at least 0.l part by weight per l00 parts by weight polymer, and subsequently peptized yield good cures with zinc and magnesium oxides providing vulcanizates having tensile strengths in excess of l0 MPa. When preparing a sulfur-modified peptized copolymer of the present invention methyl methacrylate is the preferred vinyl monomer, because when using methyl methacrylate as the vinyl monomer only about half as much sulfur based on the weight of the copolymer need be present as when preparing a conventional sulfur-modified polychloroprene. Thus only from 0.l to 0.8 wt. % sulfur based on the weight of the copolymer need be present during preparation of the copolymer. This reduction in sulfur provides a more linear peptized product with consequent improved physical properties as well as improved thermal stability.

The following examples of certain embodiments are illustrative of the invention wherein all parts, proportions and percentages are by weight unless otherwise indicated.

EXAMPLES

The following ASTM test methods were used to determine the physical properties of the polychloroprene described in the examples.

Tensile at break ($T_B$) D4l2-80

Elongation at break ($E_B$) D4l2-80

Modulus at l00, 200 and 500% elongation ($M_{100}$, $M_{200}$, $M_{500}$) D4l2-80

Compression set, Method B D395-78

Hardness, Type A D2240-8l

Mooney viscosity and Mooney scorch Dl646-8l

Accelerated heat aging by the oven method D573-8l

The amount of 2,3-dichloro-l,3-butadiene in the copolymers can be determined by chlorine analysis, IR and NMR of a refined polymer sample. The polymer is refined by dissolving it in toluene, precipitating the polymer with methanol containing about 0.l% "Octamine" (octylated diphenylamine) antioxidant, collecting the polymer by filtration and drying at reduced pressure in an inert atmosphere.

As previously mentioned, the proportion of units in the polymer derived from 2-dichloro-l,3-butadiene that have a l,4-trans configuration may be determined by the carbon-l3 NMR Method of Coleman, Tabb and Brame, Rubber Chem. Technol., Vol. 50, (l977), pages 49-62 and Coleman and Brame, Rubber Chem. Technol., Vol. 5l, No. 4 (l978), pages 668-676.

Example I

A 5 liter five-necked, round bottom flask is charged with l700g of 2-chloro-l,3-butadiene, 300g of methyl methacrylate, 3.5g of n-dodecylmercaptan, 80g of wood rosin acid, 2280g of water, 7g of sodium hydroxide, l5g of sodium salt of formaldehyde condensation product of naphthalene sulfonic acid, 0.lg of sodium 2-anthraquinone sulfonate, l ml of a l0ppm aqueous copper sulfate solution, and 7g of sodium lauryl sulfate. Polymerization is carried out at l5°C in the nitrogen-blanketed, agitated flask while adding incrementally an aqueous solution containing 5% potassium persulfate and 0.l25% sodium anthraquinone sulfonate. A 5% aqueous sodium hydrosulfite solution was also added as needed. After reaching a specific gravity of l.068g/cc (initially 0.983) and 35.3% solids concentration or a total monomer conversion of 78.5%, polymerization is terminated with a short-stopping agent (water 83.58g, sodium lauryl sulfate 79.52g, a sodium salt of formaldehyde condensation product of naphthalene sulfonic acid 2.8g, toluene l79.76g, phenothiazine 2.8g, and p-tert butylcatechol). Unreacted 2-chloro-l,3-butadiene monomer is stripped with steam at reduced pressure. The latex is acidified to a pH of 5.6 with 30% aqueous acetic acid. The polymer is coagulated from the latex by a conventional freeze-roll method (described in U.S. 2,l87,l46) and washed and dried. The Mooney viscosity of the isolated polymer is MLl+4′ (l00°C) = 40.

A gum vulcanizate from the polychloroprene copolymer shows improved freeze resistance. For example, the compression set at -l0°C for 24 hours was 38%, in contrast to a mercaptan-modified polychloroprene made from 2-chloro-l,3-butadiene which completely crystallizes. (-l0°C set value ~ l00%). The polymerized polychloroprene copolymer of the present invention containing about 5% polymerized methyl methacrylate (l5% methyl methacrylate monomer charged) is similar in crystallization resistance to that obtained at l0°C from a comonomer mixture of 92% 2-chloro-l,3-butadiene and 8% 2,3-dichloro-1,3-butadiene (about ll% 2,3-dichloro-l,3-butadiene in the polymer; 8% ACR monomer charged), as indicated below. Thus the methyl methacrylate is more effective in providing a crystallization resistant polymer than the previously used 2,3-dichloro-l,3-butadiene. The polychloroprene copolymer of this Example also exhibits better heat resistance than polychloroprene homopolymer of Experiment B or the polychloroprene copolymer of Experiment A without vinyl monomers or CD/ACR copolymers prepared at l0°C-20°C.

TABLE I

Heat and Freeze Resistance of CD,CD/ACR, and CD/MMA Polymers as Evaluated in Gum Vulcanizates (6)

| Monomer Mix | Example 1 | Comparative Experiment A | Comparative Experiment B |
|---|---|---|---|
| CD (1) | 85 | 92 | 100 |
| MMA (2) | 15 | | |
| ACR (3) | | 8 | |
| Polymerization Temperature °C | 15 | 15 | 40 |
| **Cured at 160°C for 30 minutes** | | | |
| END-75 (5) | .8 | .66 | .66 |
| $M_{100}$ (MPa) | 1.0 | 1.0 | 1.2 |
| $M_{200}$ (MPa) | 1.4 | 1.4 | 1.7 |
| $M_{300}$ (MPa) | 2.1 | 2.1 | 2.1 |
| $T_B$ (MPa) | 14.5 | 19.7 | N.B. (4) |
| $E_B$ (%) | 700 | 730 | N.B. (4) |
| Freeze Resistance Compression Set -10°C/24 hr (%) | 38 | 44 | 97 |
| Compression Set 100°C/22 hr (%) | 27 | 26 | 26 |
| **Heat Aged 7 days at 130°C** | | | |
| $M_{100}$ (MPa) | 2.4(240%) | 2.8(280%) | 4.1(341%) |
| $M_{200}$ (MPa) | 4.1(292%) | 6.2(443%) | - |
| $T_B$ (MPa) | 9.0 | 7.2 | 7.6 |
| $E_B$ (%) | 350 | 250 | 180 |
| % Retention of $E_B$ | (50) | (34) | - |

(1) 2-chloro-1,3-butadiene
(2) methyl methacrylate
(3) 2,3-dichloro-1,3-butadiene
(4) no break
(5) A 75% dispersion of ethylene thiourea curing agent
(6) Octamine 0.5 phr, stearic acid 0.5, Maglite D 4, and zinc oxide 5

Example 2

Dodecylmercaptan (DDM)-Modified 75 CD/25 MMA Polymer Prepared at l0°C

A 5 liter flask similar to that of Example I is charged with l500g of 2-chloro-l,3-butadiene, 500g of methyl methacrylate, 3.5g of dodecylmercaptan, 80g of a disproportionated wood resin, l800g of water, 7g of sodium hydroxide, l.5g of sodium salt of a formaldehyde condensation product of naphthalene sulfonic acid, l0g of 60% aqueous solution of triethanol ammonium dodecylbenzene sulfonate 0.lg of anthraquinone sulfonate, and 4g of sodium formaldehyde sulfoxylate. Polymerization is carried out substantially as described in Example I until the gravidity reading reaches l.047 (conversion based on total monomer, 59%), when it is short stopped.
ML l+4(l00°C) = 64.

l0g of the resulting polychloroprene copolymer is purified by dissolving it in l00 ml of toluene, precipitating the polymer in excess methanol (containing 0.5g of octylated diphenylamine antioxidant per 500 ml of methanol), and drying the polymer in a nitrogen-sparged vacuum oven. An infrared spectrum of this polymer film over the carbonyl region indicates a strong carbonyl C=0 bond at l720 $cm^{-1}$. According to the solution method applied to the l720 $cm^{-1}$ band, this polymer is estimated to contain about 7% methyl methacrylate. A spectrum for a mercaptan-modified polychloroprene homopolymer lacks the l720 $cm^{-1}$ carbonyl band. Proton NMR analysis based on methoxy protons indicates about 7% methyl methacrylate incorporation for this polymer, in reasonable agreement with the above IR analysis value.

Example 3

Peptized 75CD/25MMA/0.35 Sulfur Copolymer Polymerized at l0°C

A 5 liter flask similar to that of Example I is charged with l500g of 2-chloro-l,3-butadiene, 500g of methyl methacrylate, 7g of sulfur, 80g of a disproportionated wood resin, l800g of water, l5g of sodium salt of a formaldehyde condensation product of naphthalene sulfonic acid, 7g of sodium hydroxide, 0.2g of sodium 2-anthraquinone sulfonate, lg of sodium sulfoxylate, 5g of a 60% aqueous solution of triethanol ammonium dodecylbenzene sulfonate, 4g of sodium chloride, and l ml of a l0ppm copper sulfate solution. Polymerization is conducted under substantially the same conditions as described in Example I until a specific gravity increase of 0.086 is achieved in the polychloroprene copolymer. An overall conversion of 68% is obtained when polymerization is stopped by adding 83g of a stabilizer emulsion prepared from 27.5 parts of tetraethylthiuram disulfide, 28.6 parts of water, 38.l parts of toluene, 3.9 parts of sodium lauryl sulfonate, 0.8 parts of the sodium salt of a condensate of formaldehyde and naphthalene sulfonic acid and l.l parts of 4,4'-thiobis(2-methyl-6-tertbutylphenol). Following the addition of the stabilizer emulsion, 40g of a 47% aqueous solution of sodium dibutyl dithiocarbamate diluted with 40g of water and 4g of sodium lauryl sulfonate is added. The polymer is isolated using the procedure described in Example I. The Mooney Viscosity of the isolated polychloroprene copolymer is ML l+4' (l00°C) = 5l. The polymer after purification by the procedure described in Example 2 indicates that the polymer contains 7.4% of methyl methacrylate. Both sulfur l8 and methyl methacrylate are incorporated and the polychloroprene smoothly under these conditions. The amount of methyl methacrylate incorporated in the presence of sulfur is at the same level as that of Example 2 for dodecylmercaptan modified polymer.

Example 4

Evaluation of dodecylmercaptan (DDM) modified CD/MMA copolymers for their heat resistance by accelerated heat aging is reported in Table II.

Table II summarizes heat aging results for gum stocks from DDM-modified CD/MMA copolymers, indicating a superior retention of their original $E_B$ and $M_{100}$ compared to a control stock from DDM modified polychloroprene homopolymer. Table III is for carbon black stocks from sulfur-modified and DDM-modified CD/MMA and CD/ACR/MMA copolymers. Again MMA-containing copolymers are more heat resistant than a control from DDM modified polychloroprene homopolymer.

TABLE II
Heat and Freeze Resistance of DDM-Modified CD/MMA Copolymers prepared at 10°C Compared to Conventional Polymer Gum Stock(1)

| Type<br>Monomer Mix | Control<br>100CD | A<br>85CD/15MMA | B<br>75CD/25MMA |
|---|---|---|---|
| Comonomer % wt. | - | 5 | 7 |
| END- 75(2) | 0.66 | 0.8 | 0.86 |
| Cured at 160°C for 30 minutes | | | |
| $M_{100}$ (MPa) | 1.0 | 1.0 | 1.0 |
| $M_{200}$ (MPa) | 1.4 | 1.6 | 1.4 |
| $M_{300}$ (MPa) | 2.0 | 1.9 | 1.7 |
| $T_B$ (MPa) | 13.4 | 15.2 | 17.2 |
| $E_B$ (%) | 700 | 680 | 760 |
| Compression Set 24 hr/-10°C | 100+ | 94 | 21 |
| Compression Set 20 hr/100°C | 14 | 17 | 19 |
| After Heat Aging 130°C/7 days<br>( ) = % Retention of Original Properties | | | |
| $M_{100}$ (MPa) | 3.8(380) | 2.6(260) | 1.7(170) |
| $M_{200}$ (MPa) | | 4.8(300) | 3.4(243) |
| $M_{300}$ (MPa) | | | 5.5(323) |
| $T_B$ (MPa) | 6.0(45) | 8.3(55) | 8.3(48) |
| $E_B$ (%) | 190(27) | 300(44) | 380(50) |

(1) Same gum stock composition as Table I
(2) END-75 is a 75 wt % dispersion of ethylene thiourea

TABLE III

Heat Resistance of Sulfur-Modified CD/MMA and CD/MMA/ACR Copolymers and DDM-Modified CD/MMA Copolymer Conventional Polymers in Black Compounds

| Types<br>Monomer Mix | Control 1 | Control 2 | A<br>80CD/5ACR/15MMA | B<br>75CD/25MMA | C<br>75CD/25MMA |
|---|---|---|---|---|---|
| DDM | | | - | 0.175 | |
| Sulfur | | | .35 | | 0.35 |
| Polymerization Temperature °C | | | 15 | 10 | 15 |
| END-75 | - | .67 | - | 0.94 | - |
| Thiuram M | - | .5 | - | 0.5 | - |
| **Cured at 160°C for 30 minutes** | | | | | |
| Compression Set | | | | | |
| -10°C/24 hr | 41 | 100+ | 27 | 53 | 32 |
| 100°C/22 | 47 | 25 | 62 | 25 | 61 |
| $M_{100}$ (MPa) | 2.9 | 2.6 | 2.6 | 1.7 | 2.4 |
| $M_{200}$ (MPa) | 6.6 | 6.6 | 5.7 | 4.7 | 4.8 |
| $T_B$ (MPa) | 21.7 | 22.4 | 21.6 | 20.3 | 22.4 |
| $E_B$, % | 490 | 420 | 540 | 515 | 630 |
| **After Heat Aged at 125°C for 7 days** | | | | | |
| $M_{100}$ (MPa) | 8.6 | 7.9 | 6.9 | 5.2 | 6.2 |
| $M_{200}$ (MPa) | | 16.2 | 14.5 | 10.2 | 12.4 |
| $T_B$ (MPa) | 15.2 | 17.9 | 19.7 | 17.9 | 19.3 |
| $E_B$, % | 175<br>(36%) | 215<br>(51%) | 305<br>(50%) | 400<br>(78%) | 340<br>(54%) |

100 Polymer, SRF 30, Octylated diphenylamine 2, Maglite D 4, Zinc oxide 5, Stearic acid 1; END-75 (75% dispersion of ethylene thiourea) and Thiuram M (tetramethyl thiuram disulfide).

Control 1. commercial sulfur modified CD/ACR copolymer

Control 2. commercial DDM modified polychloroprene homopolymer

Example 6

Dodecylmercaptan (DDM)-Modified 75CD/25MAN (Methacrylonitrile) Copolymer Prepared at l0°C

The process of Example l was repeated, except that methacrylonitrile was used in place of methyl methacrylate. Thus l500g of 2-chloro-l,3-butadiene and 500g of methacrylonitrile were polymerized with 80g of a disproportionated rosin, 4g of dodecylmercaptan l800g of water, l5g of sodium salt of formaldehyde condensation product of naphthalene sulfonic acid, 0.2 of sodium 2-anthraquinone sulfonate, 2 ml of copper sulfate solution, 5g of a 60% aqueous solution of triethanol ammonium dodecylbenzene sulfonate, and 4g of sodium sulfoxylate. The polymer had an ML l+4 (l00°C) of 44. The overall wt. monomer conversion was 74.7%. The methacrylonitrile content of the polymer was l0.3% by weight by NMR analysis and 9.8% by nitrogen analysis.

Table IV shows that the polymer of Example 6 exhibits better heat resistance and oil resistance compared to the conventional chloroprene polymers.

Example 7

Sulfur-modified 75CD/25MAN Copolymer Prepared at l0°C

The process described in Example 5 was repeated in which 2-chloro-l,3-butadiene was polymerized with methacrylonitrile except that lg of sodium sulfoxylate was substituted for dodecylmercaptan. After polymerizing to a total conversion of 67.8%, the polychloroprene copolymer was peptized as described in Example 3. ML l+4(l00°C)= 40.

TABLE IV

Heat and Oil Resistance of CD/MAN Polymers Compared to Conventional Polychloroprene, Gumstock (4)

| | A Control (1) | B Control (2) | C |
|---|---|---|---|
| Types | | | 248 |
| Comonomer | - | ACR | MAN |
| CD/Comonomer | - | - | 75/25 |
| END-75 (3) | 0.8 | 0.8 | 1.2 |
| **Scorch 121°C** | | | |
| Minimum | 16 | 16 | 16 |
| Time to 5 pt. rise | 13 | 15 | 11 |
| Time to 10 pt. rise | 15 | 17 | 13 |
| **Cured at 160°C for 30 minutes** | | | |
| $M_{100}$ (MPa) | 1.0 | 1.0 | 1.1 |
| $M_{300}$ (MPa) | 1.8 | 2.0 | 2.0 |
| $T_B$ (MPa) | 15.2 | 10.0 | 4.5 |
| $E_B$ (%) | 720 | 640 | 580 |
| **Percent Retention of Properties** | | | |
| **HA (5) 7 Days at 121°C** | | | |
| $M_{100}$ (MPa) | 138 | 195 | 122 |
| $M_{300}$ (MPa) | 170 | 261 | 106 |
| $T_B$ (MPa) | 75 | 52 | 249 |
| $E_B$ % | 78 | 45 | 114 |
| **HA (5) 3 Days at 130°C** | | | |
| $M_{100}$ (MPa) | 169 | 198 | 123 |
| $M_{300}$ (MPa) | 216 | - | 134 |
| $T_B$ (MPa) | 41 | 34 | 139 |
| $E_B$ % | 55 | 30 | 88 |
| **Compression Set** | | | |
| 24 hours at -10°C | 99 | 24 | 21 |
| 22 hours at 100°C | 14 | 29 | 34 |
| **Oil Resistance, % Swell, ASTM #3 Oil** | 115 | 116 | 58 |

(1) commercial sulfur modified CD/ACR copolymer
(2) commercial DDM modified polychloroprene homopolymer
(3) A 75% dispersion of ethylene thiourea
(4) Same gum stock composition as Table I
(5) Heat Aged

Example 8

DDM-modified 75CD/25ST (Styrene) Copolymer Prepared at l0°C

The process described in Example I was substantially repeated except that l500g of 2-chloro-l,3-butadiene and 500g of styrene monomer were polymerized at l0°C with 3.5g of dodecylmercaptan, 80g of a disproportionated wood rosin, l800g of water, l4g of NaOH, l4g of a sodium salt of formaldehyde condensation product of naphthalene sulfonic acid, 4g of sodium sulfoxylate, and 5g of KCl. The polychloroprene copolymer obtained at a total conversion of 68.3% by wt. had a Mooney viscosity of ML l+4(l00°C) = 30.

TABLE V

Heat Resistance of 75CD/25ST Copolymer Prepared at 10°C, Gumstock (1)

| | A | B |
|---|---|---|
| Types | Control (2) | Example 8 |
| CD/Comonomer | CD | CD/ST |
| Monomer Mix | 100 | 75/25 |
| Polym. Temp. °C | 40 | 10 |
| ML 1+4(100°C) | 45 | 30 |
| END-75 | 0.6 | 0.96 |
| Thiuram M | 0.5 | 0.5 |
| **Scorch 121°C** | | |
| Minimum | 15 | 10 |
| Time to 5 Point rise | 20 | 25 |
| Time to 10 Point rise | 24 | 28 |
| **Cured, 160°C/30 min.** | | |
| $M_{100}$, (MPa) | 1.0 | 0.9 |
| $M_{200}$ (MPa) | 1.4 | 1.1 |
| $T_B$ (MPa) | 16.6 | 17.6 |
| $E_B$ (%) | 760 | 850 |
| **Retention of Properties, % After Heat Aging 7 Days/121°C** | | |
| $M_{100}$ (MPa) | 140 | 178 |
| $M_{200}$ (MPa) | 207 | 155 |
| $M_{300}$ (MPa) | 182 | 160 |
| $T_B$ (MPa) | 81 | 106 |
| $E_B$ (%) | 79 | 88 |
| Tensile Product $T_B x E_B$ | 64% | 93% |
| **Compression Set %** | | |
| 24 hours at -10°C | 100 | 30 |
| 22 hours at 100°C | 13 | 16 |

(1) Octamine 1 phr, stearic acid 0.5, Maglite D 4, and zinc oxide 5.

(2) DDM modified CD homopolymer

Example 9

DDM-Modified 75CD/25BA(Butyl acrylate) Copolymer

Example I was repeated except the polymerization was carried out at l0°C and the MMA was replaced with butyl acrylate and 3.2g of DDM was used. Total wt. % conversion 68%, ML l+4(l00°C).

Example l0

Example I was repeated except the copolymerization was carried out at l0°C, the methyl methacrylate was replaced with acrylonitrile and 30g of t-hexadecylmercaptan was used in place of the dodecylmercaptan. The copolymerization was stopped at 62% conversion and the ML l+4(l00°C) of the copolymer was 20.

Example ll

Example 3 was repeated except the polymerization was carried out at l0°C, the methyl methacrylate was replaced with acrylonitrile and l2g of sulfur was used. The copolymerization was stopped at 63% conversion and the ML l+4(l00°C) was 24.

**Claims**

1. A mercaptan, dialkyl xanthogen disulfide or sulfur-modified chloroprene copolymer comprising repeating units derived from 2-chloro-1,3-butadiene at least 92% of which units have a 1,4-trans configuration, up to 20 parts by weight per 100 parts by weight of 2-chloro-1,3-butadiene of 2,3-dichloro-1,3-butadiene, 2 to 25 parts by weight per 100 parts by weight of 2-chloro-1,3-butadiene and 2,3-dichloro-1,3-butadiene of randomly distributed vinyl monomer derived units derived from a styrene, α-methyl styrene, acrylonitrile, methacrylonitrile, acrylic acid, methacrylic acid, maleic acid, fumaric acid, lower alkyl acrylamide, lower alkyl methacrylamide, lower alkyl acrylate, lower alkyl methacrylate, lower alkyl maleates, or lower alkyl fumarates, which copolymer has a Mooney viscosity of ML 1+4′ (100°C) of from 20–150 ± 5.

2. The copolymer of Claim 1 wherein the vinyl monomer derived units are polar units.

3. The copolymer of Claim 2 wherein the vinyl monomer derived units are derived from methyl methacrylate or acrylonitrile.

4. The copolymer of Claim 1 wherein the vinyl monomer derived units are derived from styrene.

5. The copolymer of Claim 1 wherein at least 2 parts by weight of 2,3-dichloro-1,3-butadiene derived units are present per 100 parts by weight of 2-chloro-1,3-butadiene derived units.

6. The copolymer of Claim 5 wherein the vinyl monomer derived units are polar units.

7. The copolymer of Claim 6 wherein the vinyl monomer derived units are derived from methyl methacrylate, acrylonitrile or butyl acrylate.

8. The copolymer of Claim 5 wherein the vinyl monomer derived units are derived from styrene.

9. The copolymer of Claim 1 which is a sulfur-modified copolymer which has been peptized.

10. The copolymer of Claim 9 wherein vinyl monomer derived units are derived from methyl methacrylate.

11. The copolymer of Claim 10 wherein the copolymer is prepared in the presence of from 0.1 to 0.8 weight percent sulfur, based on the weight of the copolymer.

**Patentansprüche**

1. Mercaptan-, Dialkylxanthogendisulfid- oder Schwefel-modifiziertes Chloropren-Copolymeres, welches umfaßt: sich wiederholende Einheiten, die abgeleitet sind von 2-Chlor-1,3-butadien, wobei wenigstens 92% dieser Einheiten 1,4-trans-Konfiguration aufweisen, bis zu 20 Gew.-Teile pro 100 Gew.-Teile 2-Chlor-1,3-butadien an 2,3-Dichlor-1,3-butadien und 2 bis 25 Gew.-Teile pro 100 Gew.-Teile 2-Chlor-1,3-butadien und 2,3-Dichlor-1,3-butadien an statistisch verteilten, von Vinylmonomeren abgeleiteten Einheiten, die abgeleitet sind von einem Styrol, α-Methylstyrol, Acrylnitril, Methacrylnitril, Acrylsäure, Methacrylsäure, Maleinsäure, Fumarsäure, Niederalkylacrylamid, Niederalkylmethacrylamid, Niederalkylacrylat, Niederalkylmethacrylat, Niederalkylmaleaten oder Niederalkylfumaraten, wobei das Copolymere eine Mooney-Viskosität von ML 1+4′ (100°C) von 20–150 ± 5 aufweist.

2. Copolymeres nach Anspruch 1, bei dem die von dem Vinylmonomeren abgeleiteten Einheiten polare Einheiten sind.

3. Copolymeres nach Anspruch 2, bei dem die von dem Vinylmonomeren abgeleiteten Einheiten von Methylmethacrylat oder Acrylnitril abgeleitet sind.

4. Copolymeres nach Anspruch 1, bei dem die von dem Vinylmonomeren abgeleiteten Einheiten von Styrol abgeleitet sind.

5. Copolymeres nach Anspruch 1, bei dem wenigstens 2 Gew.-% an von 2,3-Dichlor-1,3-butadien abgeleiteten Einheiten pro 100 Gew.-Teile an von 2-Chlor-1,3-butadien abgeleiteten Einheiten vorhanden sind.

6. Copolymeres nach Anspruch 5, bei dem die von dem Vinylmonomeren abgeleiteten Einheiten polare Einheiten sind.

7. Copolymeres nach Anspruch 6, bei dem die von dem Vinylmonomeren abgeleiteten Einheiten von Methylmethacrylat, Acrylnitril oder Butylacrylat abgeleitet sind.

8. Copolymeres nach Anspruch 5, bei dem die von dem Vinylmonomeren abgeleiteten Einheiten von Styrol abgeleitet sind.

9. Copolymeres nach Anspruch 1, welches ein Schwefel-modifiziertes Copolymeres darstellt, das peptisiert worden ist.

10. Copolymeres nach Anspruch 9, bei dem die von Vinylmonomeren abgeleiteten Einheiten von Methylmethacrylat abgeleitet sind.

11. Copolymeres nach Anspruch 10, welches in Gegenwart von 0,1 bis 0,8 Gew.-% Schwefel, bezogen auf das Gewicht des Copolymeren, hergestellt worden ist.

**Revendications**

1. Un copolymère de chloroprène modifié par un mercaptan, un disulfure de dialkyl-xanthogène ou du soufre, comprenant des motifs récurrents dérivés de 2-chloro-1,3-butadiène, au moins 92% de ces motifs ayant une configuration 1,4-trans, jusqu'à 20 parties en poids de 2,3-dichloro-1,3-butadiène pour 100 parties en poids de 2-chloro-1,3-butadiène, et 2 à 25 parties en poids de motifs dérivés de monomère vinylique répartis au hasard, dérivés de styrène, α-méthylstyrène, acrylonitrile, méthacrylonitrile, acide acrylique, acide méthacrylique, acide maléique, acide fumarique (alkyle inférieur)acrylamide, (alkyle inférieur)méthacrylamide, acrylate d'alkyle inférieur, méthacrylate d'alkyle inférieur, maléates d'alkyles inférieurs ou fumarates d'alkyles inférieurs, pour 100 parties en poids de 2-chloro-1,3-butadiène et 2,3-dichloro-1,3-butadiène, ce copolymère ayant une viscosité Mooney ML 1+4' (100°C) de 20 à 150 ± 5.

2. Le copolymère de la revendication 1, dans lequel les motifs dérivés de monomère vinylique sont des motifs polaires.

3. Le copolymère de la revendication 2, dans lequel les motifs dérivés de monomère vinylique sont dérivés de méthacrylate de méthyle ou d'acrylonitrile.

4. Le copolymère de la revendication 1, dans lequel les motifs dérivés de monomère vinylique sont dérivés de styrène.

5. Le copolymère de la revendication 1, dans lequel il y a au moins 2 parties en poids de motifs dérivés du 2,3-dichloro-1,3-butadiène pour 100 parties en poids de motifs dérivés du 2-chloro-1,3-butadiène.

6. Le copolymère de la revendication 5, dans lequel les motifs dérivés de monomère vinylique sont des motifs polaires.

7. Le copolymère de la revendication 6, dans lequel les motifs dérivés de monomère vinylique sont dérivés de méthacrylate de méthyle, d'acrylonitrile ou d'acrylate de butyle.

8. Le copolymère de la revendication 5, dans lequel les motifs dérivés de monomère vinylique sont dérivés de styrène.

9. Le copolymère de la revendication 1, qui est un copolymère modifié par du soufre ayant été peptisé.

10. Le copolymère de la revendication 9, dans lequel les motifs dérivés de monomère vinylique sont dérivés de méthacrylate de méthyle.

11. Le copolymère de la revendication 10, dans lequel le copolymère est préparé en présence de 0,1 à 0,8 pour cent en poids de soufre, par rapport au poids du copolymère.

FIG. 1

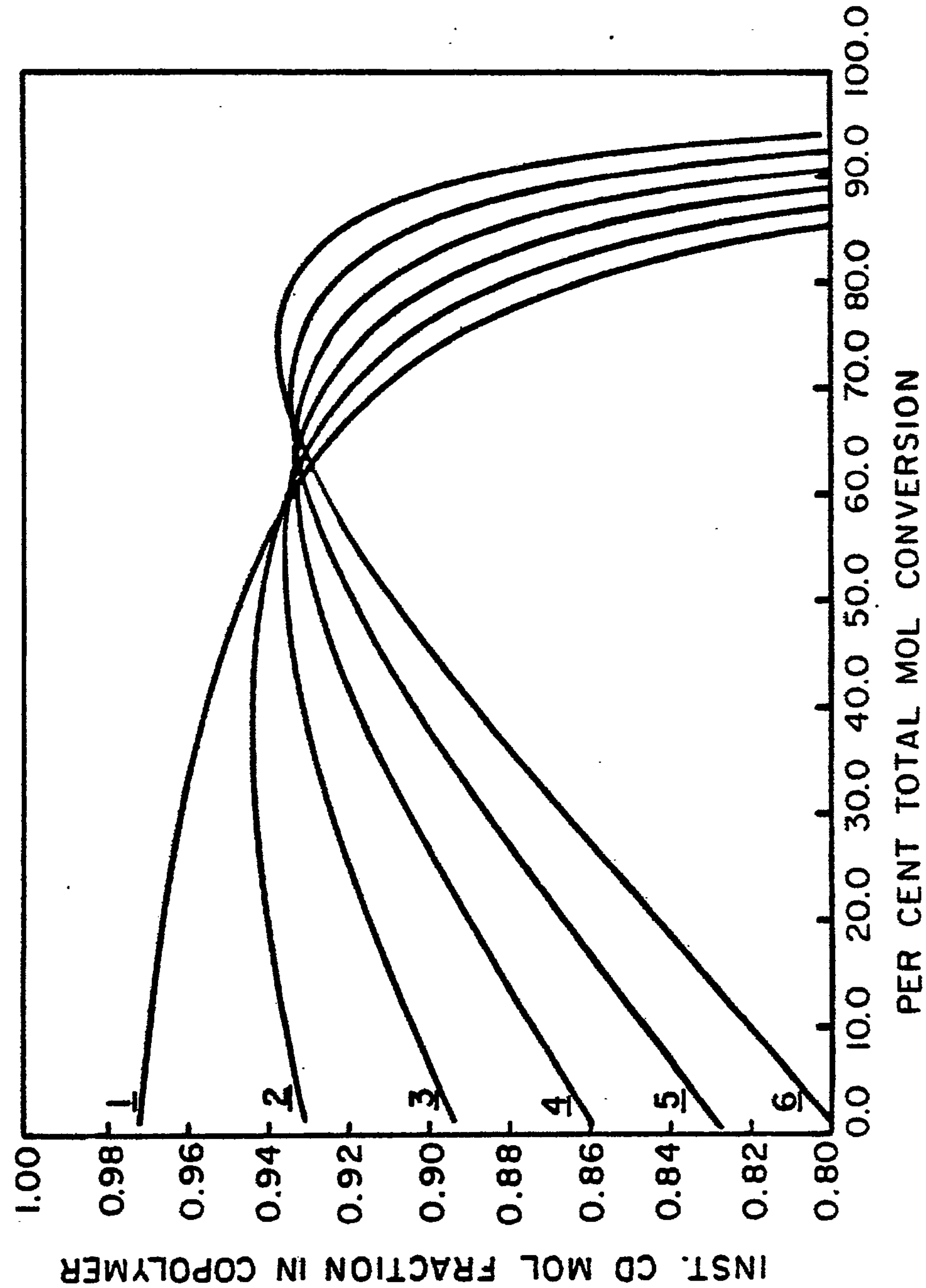
INST. CD MOL FRACTION IN COPOLYMER
1.00
0.98
0.96
0.94
0.92
0.90
0.88
0.86
0.84
0.82
0.80
PER CENT TOTAL MOL CONVERSION
0.0
10.0
20.0
30.0
40.0
50.0
60.0
70.0
80.0
90.0
100.0
1
2
3
4
5
6

FIG. 2

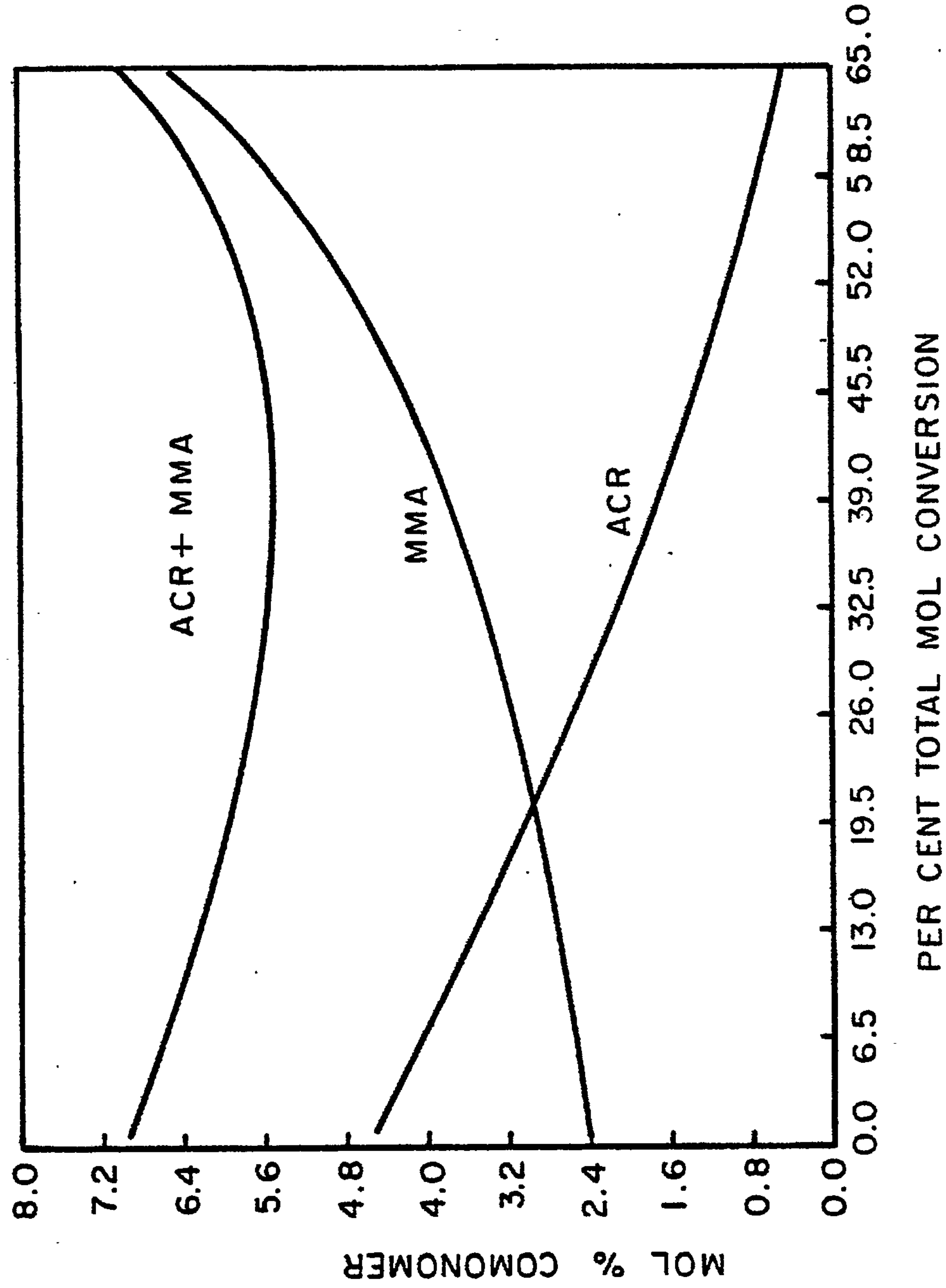
ACR + MMA
MMA
ACR
MOL % COMONOMER
8.0
7.2
6.4
5.6
4.8
4.0
3.2
2.4
1.6
0.8
0.0
PER CENT TOTAL MOL CONVERSION
0.0
6.5
13.0
19.5
26.0
32.5
39.0
45.5
52.0
58.5
65.0